Europäisches Patentamt

European Patent Office

Office européen des brevets

(11) Veröffentlichungsnummer: **0 445 515 A2**

# (12) EUROPÄISCHE PATENTANMELDUNG

(21) Anmeldenummer: **91100933.0**

(22) Anmeldetag: **25.01.91**

(51) Int. Cl.5: **B29C 47/04**

(30) Priorität: **07.03.90 DE 4007234**

(43) Veröffentlichungstag der Anmeldung:
**11.09.91 Patentblatt 91/37**

(84) Benannte Vertragsstaaten:
**AT BE CH DE DK ES FR GB GR IT LI LU NL SE**

(71) Anmelder: **W. Döllken & Co GmbH**
**Ruhrtalstrasse 71**
**W-4300 Essen 16(DE)**

(72) Erfinder: **Laarmann, Willi**
**Langeoogweg 7**
**W-4300 Essen(DE)**

(74) Vertreter: **Andrejewski, Walter, Dipl.-Phys. Dr.**
**et al**
**Patentanwälte Andrejewski, Honke & Masch**
**Postfach 10 02 54 Theaterplatz 3**
**W-4300 Essen 1(DE)**

(54) **Vorrichtung zum Herstellen eines marmorierten Profils aus thermoplastischem Kunststoff.**

(57) Vorrichtung zum Herstellen eines marmorierten Profils aus thermoplastischem Kunststoff, - mit einem Extruder mit einem Extrudergehäuse und zumindest einer Schneckenwelle, einem profilgebenden Strangwerkzeug mit einem Werkzeuggehäuse und einer Einrichtung zum Einführen eines Marmorierungskunststoffes in den Mengenstrom des in dem Extruder aufbereiteten Grundkunststoffes. Die Einrichtung zur Einführung des Marmorierungskunststoffes weist einen Einführungsschaft mit zumindest einem Einführungskanal und einer Düsenbohrung für den Marmorierungskunststoff auf. Der Einführungsschaft ist um seine Achse rotierbar angetrieben. Seine Umdrehungszahl ist unabhängig von der Umdrehungszahl der Schneckenwelle einstellbar oder steuerbar.

Fig.1

Die Erfindung betrifft eine Vorrichtung zum Herstellen eines marmorierten Profils aus thermoplastischem Kunststoff, - mit einem Extruder mit einem Extrudergehäuse und zumindest einer Schneckenwelle, einem profilgebenden Strangwerkzeug mit einem Werkzeuggehäuse und einer Einrichtung zum Einführen eines Marmorierungskunststoffes in den Mengenstrom des in dem Extruder aufbereiteten Grundkunststoffes, wobei die Einrichtung zur Einführung des Marmorierungskunststoffes einen Einführungsschaft mit zumindest einem Einführungskanal und einer Düsenbohrung für den Marmorierungskunststoff aufweist. - Marmorierte Profile aus thermoplastischem Kunststoff werden in den verschiedensten Zweigen der Technik benötigt, insbesondere in der Möbelindustrie, zum Beispiel als sogenannte Kantenleisten. Im Rahmen der Erfindung kann der Einführungsschaft sowohl im Bereich des Extrudergehäuses als auch im Bereich des Werkzeuggehäuses münden.

Bei der bekannten Vorrichtung, von der die Erfindung ausgeht (DE 35 19 116), ist der Einführungsschaft in das Extrudergehäuse oder auch in das Werkzeuggehäuse fest eingesetzt. Er kann nicht rotieren. Der Einführungsschaft mündet in den Mengenstrom des Grundkunststoffes vor der Schneckenwelle, taucht aber nicht in den Mengenstrom des Grundkunststoffes ein. Er endet gleichsam in der Wandung des Gehäuses. Die Schneckenwelle ist mit rührenden Paddeln ausgerüstet. Der Marmorierungseffekt hängt von der Umdrehungszahl der Schneckenwelle und dem Verhältnis der Mengenströme einerseits des Grundkunststoffes und andererseits des Marmorierungskunststoffes ab. Er kann nur in Grenzen variiert werden. Demgegenüber verlangt die Praxis in zunehmendem Maße marmorierte Profile nicht nur unterschiedlichen Profilquerschnittes, sondern auch unterschiedlichen Marmorierungseffektes. Bei der bekannten Ausführungsform kann der Profilquerschnitt durch Gestaltung des Strangpreßwerkzeuges unschwer verändert werden. Das gilt wegen der vorstehend angesprochenen Zusammenhänge jedoch nicht für den Marmorierungseffekt.

Der Erfindung liegt die Aufgabe zugrunde, eine Vorrichtung des eingangs beschriebenen Aufbaus so weiter auszubilden, daß der Marmorierungseffekt unabhängig von der Umdrehungszahl der Schneckenwelle und unabhängig von den Mengenströmen verändert werden kann.

Zur Lösung dieser Aufgabe lehrt die Erfindung, daß der Einführungsschaft um seine Achse rotierbar angetrieben und seine Umdrehungszahl unabhängig von der Umdrehungszahl der Schneckenwelle einstellbar oder steuerbar ist. Der Einführungsschaft wird auf diese Weise zu einer angetriebenen Welle. Es versteht sich, daß diese an einen entsprechenden Antrieb angeschlossen ist. Erfindungsgemäß ist folglich ein zusätzlicher Freiheitsgrad für die Beeinflussung des Marmorierungseffektes geschaffen worden.

Im einzelnen bestehen im Rahmen der Erfindung mehrere Möglichkeiten der weiteren Ausbildung und Gestaltung. Eine bevorzugte Ausführungsform der Erfindung ist dadurch gekennzeichnet, daß der Einführungsschaft in den Mengenstrom des Grundkunststoffes eintaucht, zum Beispiel um einige Zentimeter hineinragt, um gleichsam eine innere Einmischung des Marmorierungskunststoffes zu erreichen, die aber auch in der Oberfläche sichtbar wird. Die Eintauchtiefe kann verstellbar sein. Ein Einführungsschaft für Marmorierungskunststoff, der in den Mengenstrom des Grundkunststoffes eintaucht, ist an sich bekannt (vgl. DE 37 17 967.5-09), jedoch rotiert bei dieser bekannten Ausführungsform der Einführungsschaft nicht, so daß auch diese bekannten Maßnahmen die der Erfindung zugrundeliegende Aufgabe nicht lösen.

Im Rahmen der Erfindung liegt es, den Einführungsschaft mit verschiedenen Einführungskanälen und entsprechenden Düsenbohrungen zu versehen, um Marmorierungskunststoff unterschiedlicher Färbung in den Mengenstrom des Grundkunststoffes hineinzubringen. Eine bevorzugte Ausführungsform, die zu sehr ausgeprägten Marmorierungseffekten führt, ist dadurch gekennzeichnet, daß der Einführungsschaft einen Düsenkopf und in dem Düsenkopf eine Mehrzahl von Düsenbohrungen aufweist, die zweckmäßigerweise in bezug auf die Achse des Einführungsschaftes verzweigt sind. Vorrichtungen zum Herstellen eines marmorierten Profils aus thermoplastischem Kunststoff, die mit einem rotierenden Düsenkopf arbeiten, sind an sich bekannt (vgl. DE 37 00 724.6-09). Bei dieser bekannten Ausführungsform ist jedoch der Düsenkopf an die Schneckenwelle angeschlossen, so daß auch bei dieser bekannten Ausführungsform ein zusätzlicher Freiheitsgrad für die Beeinflussung des Marmorierungseffektes nicht erreicht ist.

Bei der erfindungsgemäßen Ausführungsform kann der Einführungsschaft radial angeordnet sein. Radial meint in bezug auf ein Gehäuse mit einem kreisförmigen Querschnitt bzw. Strömungskanal für den Grundkunststoff, wobei es sich sowohl um das Werkzeuggehäuse als auch um das Extrudergehäuse handeln kann. Eine bevorzugte Ausführungsform der Erfindung, die primär zu einer gleichsam schraubenwendelförmigen Verteilung des Marmorierungskunststoffes in den Mengenstrom des Grundkunststoffes führt und folglich den Marmorierungseffekt weiter verbessert, ist dadurch gekennzeichnet, daß der Einführungsschaft schräg zur Strömungsrichtung des Mengenstromes angeordnet ist. Die Schrägstellung kann mit Hilfe eines entsprechenden Durchführungsgelenkes einstellbar sein. Es versteht sich, daß dieses auch für den Düsenkopf gilt, wenn der Einführungsschaft mit einem Düsenkopf versehen ist. Im Rahmen der Erfindung liegt es, den Einführungsschaft außerhalb des Zentrums des Mengenstromes des Grundkunststoffes, gleichsam exzentrisch, anzuordnen.

Im folgenden wird die Erfindung anhand einer lediglich ein Ausführungsbeispiel darstellenden Zeichnung ausführlicher erläutert. Es zeigen in schematischer Darstellung

Fig. 1     einen Längsschnitt durch eine erfindungsgemäße Vorrichtung, ausschnittsweise,

Fig. 2     entsprechend der Fig. 1 eine andere Ausführungsform der erfindungsgemäßen Vorrichtung,

Fig. 3     entsprechend der Fig. 1 eine andere Ausführungsform einer erfindungsgemäßen Vorrichtung.

Die in den Figuren dargestellte Vorrichtung dient zum Herstellen eines marmorierten Profils aus thermoplastischem Kunststoff. Zum grundsätzlichen Aufbau gehören ein Extruder mit einem Extrudergehäuse 1 und Ausführungsbeispiel einer Schneckenwelle 2, ein profilgebendes Strangpreßwerkzeug mit einem Werkzeuggehäuse 3 und eine Einrichtung 4 zur Einführung eines Marmorierungskunststoffes. Der Marmorierungskunststoff wird in den Mengenstrom eines in dem Extruder 1, 2 aufbereiteten Grundkunststoffes eingeführt. Die Einrichtung 4 zum Einführen des Marmorierungskunststoffes besitzt einen Einführungsschaft 5 mit zumindest einem Einführungskanal 6 für den Marmorierungskunststoff in den Mengenstrom des Grundkunststoffes. Dieser Einführungskanal 6 wurde in den Figuren angedeutet. Er führt zu einer Düsenbohrung 7, aus der der Marmorierungskunststoff austritt.

Durch Bogenpfeil wurde in den Figuren angedeutet, daß der Einführungsschaft 5 um seine Achse rotierbar angetrieben ist. Seine Umdrehungszahl ist unabhängig von der Umdrehungszahl der Schneckenwelle 2 einstellbar bzw. steuerbar. Im Rahmen der Erfindung liegt es, die Steuerung in einen Regelkreis für bestimmte Effekte zu integrieren.

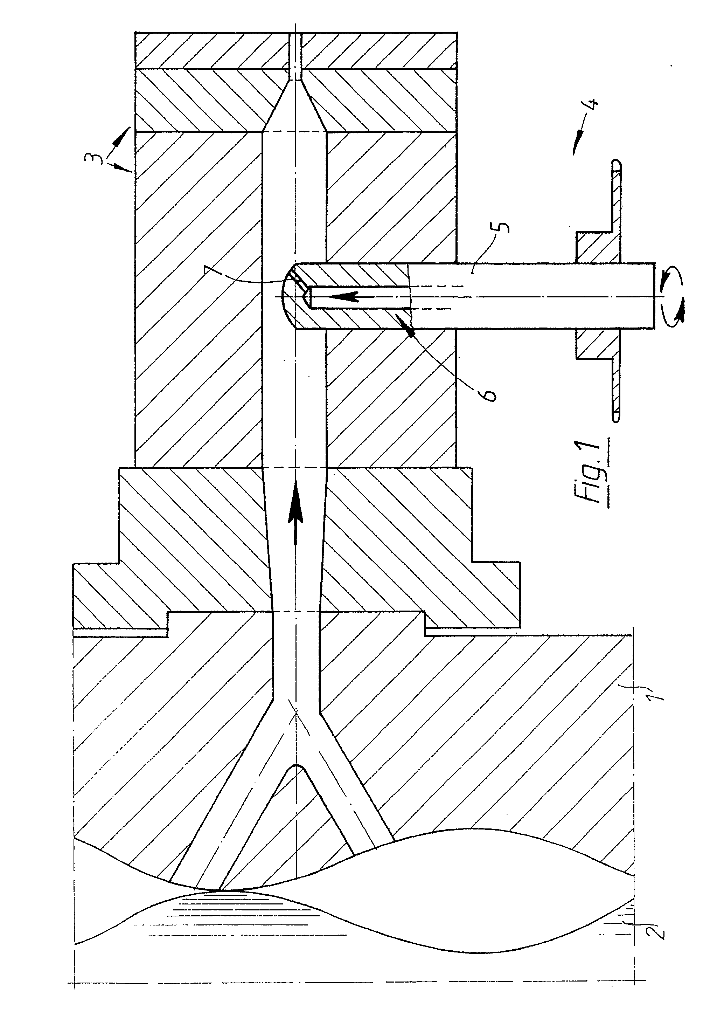

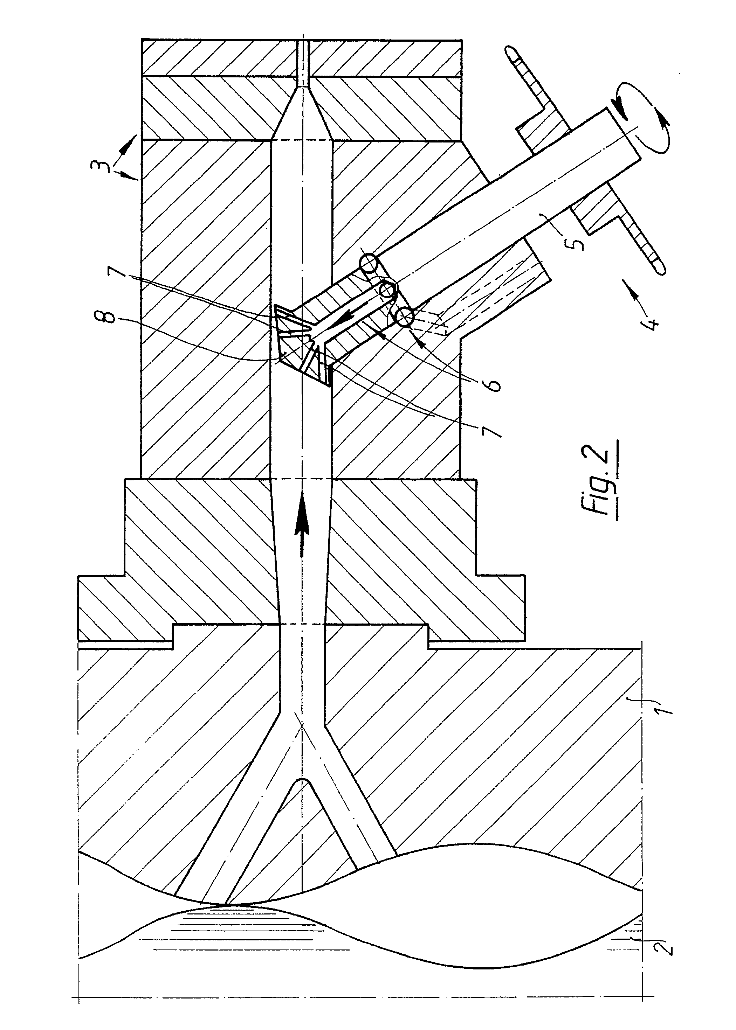

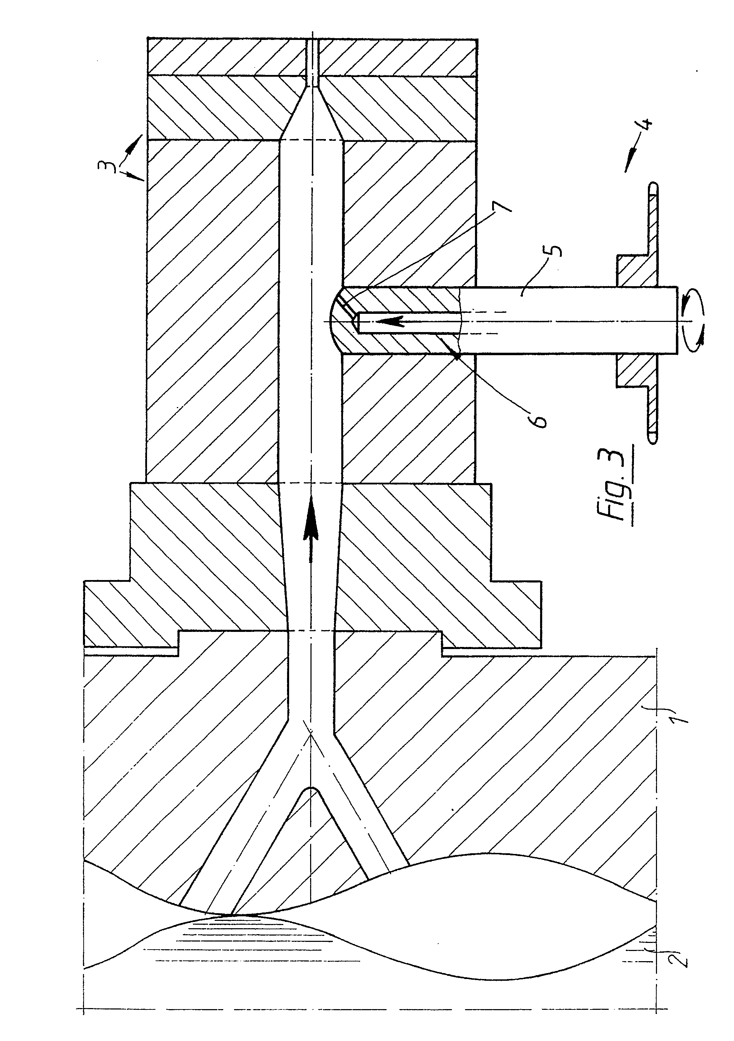

Im Ausführungsbeispiel und nach bevorzugter Ausführungsform der Erfindung ragt der Einführungsschaft 5 in den Mengenstrom des Grundkunststoffes mit einem Abschnitt seiner Länge hinein. Bei der Ausführungsform nach Fig. 1 besitzt der Einführungsschaft 5 auch die Düsenbohrung 7 für das Austreten des Marmorierungskunststoffes. Bei der Ausführungsform nach Fig. 2 ist der Einführungsschaft 5 mit einem Düsenkopf 8 versehen, der eine Mehrzahl von Düsenbohrungen 7 aufweist, die im Ausführungsbeispiel verzweigt sind. Bei der Ausführungsform nach Fig. 1 ist der Einführungsschaft 5 radial angeordnet. Bei der Ausführungsform nach Fig. 2 verläuft die Achse des Einführungsschaftes schräg zur Strömungsrichtung des Mengenstromes. Die Fig. 3 macht deutlich, daß der Einführungsschaft 5 auch außerhalb des Zentrums des Mengenstromes des Grundkunststoffes münden kann. Es versteht sich, daß der Düsenkopf 8 auch unsymmetrisch ausgeführt sein kann. Insbesondere bei der Ausführungsform nach den Figuren 1 und 3 wird man den Einführungsschaft 5 in einem Bereich anordnen, in dem der Mengenstrom des Grundkunststoffes noch eine Drallkomponente aufweist.

## Patentansprüche

1.     Vorrichtung zum Herstellen eines marmorierten Profils aus thermoplastischem Kunststoff, - mit

    einem Extruder mit einem Extrudergehäuse und zumindest einer Schneckenwelle,

    einem profilgebenden Strangwerkzeug mit einem Werkzeuggehäuse und

    einer Einrichtung zum Einführen eines Marmorierungskunststoffes

    in den Mengenstrom des in dem Extruder aufbereiteten Grundkunststoffes, wobei die Einrichtung zur Einführung des Marmorierungskunststoffes einen Einführungsschaft mit zumindest einem Einführungskanal und einer Düsenbohrung für den Marmorierungskunststoff aufweist, **dadurch gekennzeichnet,** daß der Einführungsschaft (5) um seine Achse rotierbar angetrieben und seine Umdrehungszahl unabhängig von der Umdrehungszahl der Schneckenwelle (2) einstellbar oder steuerbar ist.

2.     Vorrichtung nach Anspruch 1, dadurch gekennzeichnet, daß der Einführungsschaft (5) in den Mengenstrom des Grundkunststoffes eintaucht.

3.     Vorrichtung nach einem der Ansprüche 1 oder 2, dadurch gekennzeichnet, daß der Einführungsschaft (5) einen Düsenkopf (8) und in dem Düsenkopf eine Mehrzahl von Düsenbohrungen (7) aufweist.

4.     Vorrichtung nach einem der Ansprüche 1 bis 3, dadurch gekennzeichnet, daß der Einführungsschaft (5) radial angeordnet ist.

5.     Vorrichtung nach einem der Ansprüche 1 bis 3 dadurch gekennzeichnet, daß der Einführungsschaft (5) schräg zur Strömungsrichtung des Mengenstromes angeordnet ist.

6. Vorrichtung nach einem der Ansprüche 1 bis 3 und 5, da-durch gekennzeichnet, daß der Einführungsschaft (5) außerhalb des Zentrums des Mengenstromes des Grundkunststoffes mündet.

Fig.1

*Fig. 2*

Fig. 3

EP 0 445 515 A2